# EUROPEAN PATENT APPLICATION

(11) **EP 4 790 018 A1**
(43) Date of publication of application: **12.08.2026**
(21) Application number: 25156504.0
(22) Date of filing: 07.02.2025
(51) Int. Cl.: C01B 25/37, C22B 3/24

(54) **METHOD FOR RECYCLING IRON IONS AND PREPARING IRON(III) PHOSPHATE**

(71) Applicant: Hydroionic Technologies Co. Ltd., Taipei City (TW)
(72) Inventor: WU, Shun-Hsuan, Taipei City (TW)
(74) Representative: van Dam, Vincent

(57) **Abstract**

A method for recycling iron ions and preparing FePO₄ is provided. The method includes: (a) providing an iron ion-containing solution; (b) passing the iron ion-containing solution through a chelating cation exchange resin to obtain an ion-adsorbed resin and a first eluate; (c) desorbing ferric ions from the ion-adsorbed resin using a phosphoric acid solution with a concentration ranging from 10 wt% to 45 wt%, producing an ion-desorbed resin and a second eluate; and (d) heating the second eluate to produce a third solution containing an FePO₄ precipitate. This method efficiently recycles iron ions, prepares FePO₄ with minimal waste, and reduces overall costs.

## Description

The present disclosure relates to a method for recycling iron ions and producing an iron compound, specifically focusing on the recycling of iron ions to prepare iron(III) phosphate.

Recently, the recycling and reuse of resources have become key objectives across various industries, aiming to reduce environmental harm, conserve natural resources, and promote sustainable social and economic development. Methods for recycling and resource reuse encompass several approaches, including the use of renewable energy, pollution reduction, and waste recycling.

Iron(III) chloride (FeCl₃) and iron(III) sulfate (Fe₂(SO₄)₃) are important inorganic compounds known for their high reactivity, including their corrosive and oxidizing properties. Accordingly, iron(III) chloride solution is widely used in various applications, such as metal etching, metal surface treatment, heavy metal removal from sewage, and particularly in the etching of printed circuit boards (PCBs). In addition, iron chloride and iron sulfate are often found in pickling waste solutions produced by pickling rust scales of steel coil, wire rod and fasteners with hydrochloric acid and sulfuric acid in the steel industry. However, once the pickling solutions containing iron ions (iron(III) chloride solution or iron(III) sulfate solution) is used in these processes, it becomes difficult to reuse due to diminished chemical reactivity and the accumulation of impurities (both metal and non-metal elements). This results in the creation of iron chloride waste solution or iron sulfate waste solution, which can pose environmental pollution risks if not properly managed. Furthermore, iron ions in iron chloride waste solution or iron sulfate waste solution are valuable and widely used in various industries. Abandoning these ions along with the waste solution leads to resource wastage.

Iron(III) phosphate (FePO₄) is an iron compound with a variety of applications, including as a coating material for enhancing metal surface corrosion resistance and as an agricultural fertilizer to provide an iron source. Additionally, iron(III) phosphate is used to produce lithium iron phosphate (LiFePO₄, LFP), which serves as the cathode material in lithium iron phosphate battery. These batteries are known for their high safety, low cost and long service life, making them widely used in products such as electric vehicles and energy storage devices.

To address the recycling challenges of iron chloride waste solutions or iron sulfate waste solutions and the widespread use of iron(III) phosphate, a method has been developed to recycle and reuse iron ions from these waste solutions to produce iron(III) phosphate. This method aligns with the goal of resource recycling and reuse. Currently, the typical approach involves adding phosphoric acid directly to the iron chloride waste solution or the iron sulfate waste solution, followed by heating to combine the iron and phosphate ions, resulting in the formation of an iron(III) phosphate precipitate. However, the method has several drawbacks:
1) After iron(III) phosphate precipitate is formed, the solution often contains excess, unreacted phosphate ions, along with large amounts of chloride ions, sulfate ions and other anions or metal ions, making it difficult to reuse and generating additional waste, which undermines resource sustainability.
2) Due to the accumulation of impurities and the difficulty of reusing the solution, fresh phosphoric acid is required for each time. This leads to continuous consumption of resources, and higher costs, as phosphoric acid is generally expensive.
3) In addition to iron ions, the iron chloride waste solution or the iron sulfate waste solution typically contains high concentrations of sodium ions, which result in elevated sodium content (e.g., above 200 ppm) in the produced iron(III) phosphate precipitate. This excess sodium adversely affects the performance of lithium iron phosphate batteries, as sodium ions interfere with the movement of lithium ions. Consequently, the iron(III) phosphate precipitate produced by this method often fails to meet the criteria for use as a cathode material in lithium iron phosphate batteries, where the sodium content should be below 150 ppm.

Therefore, there remains a need to develop a novel method that efficiently recycles iron ions from solutions, such as iron chloride waste solutions or iron sulfate waste solutions, and uses the recycled iron ions to produce iron(III) phosphate that meets the requirements for use as a cathode material in lithium iron phosphate batteries. At the same time, this novel method should minimize waste solution production and reduce costs, aligning with the goal of resource sustainability.

In light of the issues in the prior art, the objective of the present disclosure is to provide a method for recycling iron ions and preparing iron(III) phosphate. This method involves recycling iron ions from a solution and then using a phosphoric acid solution to directly prepare iron(III) phosphate that meets the requirements for use as a cathode material in lithium iron phosphate batteries. Additionally, the method generates minimal waste solution and facilitates the easy recycling and reuse of the phosphoric acid solution, thereby reducing overall costs.

Another obj ective of the present disclosure is to provide a method for recycling iron ions and preparing iron(III) phosphate that achieves a higher yield of iron(III) phosphate compared to the methods in the prior art.

To achieve the foresaid objectives, the present disclosure provides a method for recycling iron ions and preparing iron(III) phosphate, comprising the following steps:
Step (a): Providing an iron ion-containing solution, wherein, the iron ion-containing solution comprises an iron chloride solution, an iron sulfate solution, or a combination thereof;
Step (b): Passing the iron ion-containing solution through a chelating cation exchange resin capable of adsorbing ferric ions, producing an ion-adsorbed resin and a first eluate;
Step (c): Passing a phosphoric acid solution through the ion-adsorbed resin to desorb ferric ions, thereby obtaining an ion-desorbed resin and a second eluate, wherein the second eluate comprises ferric ions and phosphate ions, and the phosphoric acid solution has a concentration ranging from 10 wt% to 45 wt%; and
Step (d): Heating the second eluate to obtain a third solution, which comprises an iron(III) phosphate precipitate.

By employing the following technical steps:
1) adsorbing ferric ions using a specific resin and desorbing ferric ions with a phosphoric acid solution of a defined concentration; and
2) heating to obtain the iron(III) phosphate precipitate, the method of the present disclosure produces an iron(III) phosphate precipitate that meets the criteria for use as a cathode material in lithium iron phosphate batteries, specifically with a sodium content of less than 150 ppm.

Additionally, by adsorbing the ferric ions, the chelating cation exchange resin used in the foresaid Step (b) effectively separates most anions from the iron ion-containing solution that would otherwise compete with phosphate ions for binding with iron ions. For instance, when the iron ion-containing solution comprises the iron chloride solution, chloride ions (Cl⁻) compete with phosphate ions. As a result, the phosphate ions and competing anions are not present in the same solution after the phosphoric acid solution is used to desorb the ferric ions. Consequently, the third solution, which comprises the iron(III) phosphate precipitate, primarily contains excess, unreacted phosphate ions, which can be recycled for preparing new phosphoric acid solution, thereby reducing the cost of phosphoric acid. Meanwhile, the first eluate, which contains the competing anions, holds potential for future applications, thus helping to reduce waste solution.

The iron ion-containing solution may comprise an iron chloride solution, an iron sulfate solution or a combination of both, and does not exclude comprising other types of iron ion-containing solutions.

The iron ion-containing solution may comprise ferrous ions (Fe₂⁺), ferric ions (Fe₃⁺), or a combination of both. The iron chloride solution may be a solution comprising ferric chloride, ferrous chloride, or ferric chloride and ferrous chloride. The iron sulfate solution may be a solution comprising ferric sulfate, ferrous sulfate, or ferric sulfate and ferrous sulfate. It is understood that the iron ion-containing solution also contains anions that can bind with iron ions (either ferrous or ferric). For example, when the iron ion-containing solution is an iron chloride solution, the anion is chloride ion, and when the iron ion-containing solution is an iron sulfate solution, the anion is sulfate ion (SO₄²⁻), but it is not limited thereto.

In some embodiments, the iron ion-containing solution may be a waste solution containing iron ions, such as an iron chloride waste solution, an iron sulfate waste solution, or a combination of both. These acidic waste solutions, which contain ferric ions and/or ferrous ions, may originate from processes like metal etching, metal surface treatment, or heavy metal removal from sewage; or from acidic solutions that dissolve fly ashes of carbon steel or stainless steel, furnace slag or iron oxide sludge. The term "waste solution" refers to a solution that, after use, contains additional substances not present in the original solution. For example, the iron chloride waste solution may contain not only iron and chloride ions but also other elements and/or their ions, such as aluminum (Al), boron (B), calcium (Ca), cadmium (Cd), chromium (Cr), copper (Cu), potassium (K), magnesium (Mg), manganese (Mn), sodium (Na), nickel (Ni), lead (Pb), zinc (Zn), cobalt (Co), lithium (Li), phosphorus (P) and/or sulfur (S), but it is not limited thereto. The concentration of these elements may vary, with the content of each element being less than a specified value, such as aluminum being less than 10,000 ppm, boron being less than 20,000 ppm, calcium being less than 10,000 ppm, cadmium being less than 10,000 ppm, chromium being less than 500 ppm, copper being less than 1,000 ppm, potassium being less than 100,000 ppm, magnesium being less than 10,000 ppm, manganese being less than 10,000 ppm, sodium being less than 20,000 ppm, nickel being less than 10,000 ppm, lead being less than 7,000 ppm, zinc being less than 10,000 ppm, cobalt being less than 10,000 ppm.

In some embodiments, after the foresaid Step (a) and before the foresaid Step (b), the method for recycling iron ions and preparing iron(III) phosphate further comprises the following steps: Step (i): adjusting the pH of the iron ion-containing solution to a range from 3 to 6 to obtain a first solution; and Step (ii): oxidizing ferrous ions in the first solution to ferric ions to obtain a second solution; wherein, the second solution is the iron ion-containing solution that passes through the chelating cation exchange resin in the foresaid Step (b). The foresaid Steps (i) and (ii) may be adopted when most iron ions in the iron ion-containing solution are ferrous ions.

In some embodiments, a chelating functional group of the chelating cation exchange resin may comprise iminodiacetic acid (IDA; molecular formula: C₄H₇NO₄). Specifically, the chelating cation exchange resin may be commercially available products, such as LanXess TP-207 and LanXess TP-208 resins manufactured by LANXESS Corporation; Amberlite IRC-748 resin manufactured by Rohm and Haas Company; Diaion CR-11 resin manufactured by MITSUBISHI CHEMICAL GROUP; Resinex CH-20 and Resinex CH-23 resins manufactured by JACOBI CARBONS; and Tulsion CH-90 resin manufactured by THERMAX, but it is not limited thereto. These commercially available chelating cation exchange resins exhibit high selectivity for adsorbing ferric ions, meaning their ability to adsorb ferric ions is greater than that for other cations. These other cations may include divalent ions such as Cu²⁺, Pb²⁺, Ni²⁺, Zn²⁺, Cd²⁺, Co²⁺, Ca²⁺, Cr²⁺, Mg²⁺, Mn²⁺, K⁺, Na⁺ or Al³⁺, but it is not limited thereto.

In some embodiments, the flow rate of the second solution through the chelating cation exchange resin may range from 3 bed volumes per hour (BV/hr) to 10 BV/hr.

In some embodiments, the phosphoric acid solution may have a concentration ranging from 10 wt% to 40 wt%. In other embodiments, the concentration of the phosphoric acid solution may range from 10 wt% to 35 wt%, 10 wt% to 30 wt%, or 15 wt% to 35 wt%.

In some embodiments, the pH of the iron ion-containing solution is adjusted to a range of 3 to 4 in the foresaid Step (i).

In some embodiments, a sodium content in the iron(III) phosphate precipitate may be less than 150 ppm. In other embodiments, a sodium content in the iron(III) phosphate precipitate may be less than 100 ppm, less than 50 ppm, or even less than 25 ppm.

In some embodiments, the iron ion-containing solution may comprise the iron chloride solution, and a chloride content in the third solution may be less than 4,000 ppm. When the iron ion-containing solution comprises the iron chloride solution, it typically contains a high concentration of chloride ions, often exceeding 30,000 ppm. However, using the method of the present disclosure, the chloride content in the third solution can be reduced by up to 90%. As a result, the solution after the formation of the iron(III) phosphate precipitate primarily contains excess, unreacted phosphate ions, which can be recycled for the preparation of phosphoric acid solution.

In some embodiments, the iron ion-containing solution may comprise the iron chloride solution, and a chloride content in the third solution may be less than 3,000 ppm.

In some embodiments, the iron ion-containing solution may comprise the iron sulfate solution, and a sulfate content in the third solution may be less than 4,000 ppm.

In some embodiments, the iron ion-containing solution may comprise the iron sulfate solution, and a sulfate content in the third solution may be less than 3,000 ppm.

In some embodiments, the pH of the second eluate may range from 0.65 to 1.45. In other embodiments, the pH of the second eluate may range from 0.7 to 1.4.

In some embodiment, the second eluate may contain less than 5 ppm of calcium, less than 35 ppm of copper, less than 150 ppm of potassium, less than 5 ppm of magnesium, less than 150 ppm of sodium, less than 3 ppm of nickel, less than 1 ppm of lead, less than 5 ppm of aluminum, and/or less than 15 ppm of zinc.

In some embodiment, the second eluate may contain less than 5 ppm of calcium, less than 0.5 ppm of copper, less than 2 ppm of potassium, less than 0.5 ppm of magnesium, less than 150 ppm of sodium, less than 1.5 ppm of nickel, less than 0.5 ppm of lead element, less than 0.5 ppm of aluminum, and/or less than 15 ppm of zinc.

In some embodiments, in the foresaid Step (d), the second eluate is heated at 70°C to 90°C for 4 hours to 6 hours to obtain the third solution.

In the foresaid Step (ii), the method of oxidizing ferrous ions in the first solution to ferric ions is not limited, and can be selected based on the specific circumstances and needs, as long as is does not affect the intended results of the present disclosure. For example, an oxidant may be added to oxidize the ferrous ions to ferric ions, but it is not limited thereto.

In some embodiments, in the foresaid Step (ii), an oxidant is added into the first solution to oxidize the ferrous ions to ferric ions. The oxidant may comprise a hydrogen peroxide (H₂O₂) solution, with the concentration of hydrogen peroxide ranging from 10 wt% to 50 wt%.

In some embodiments, the foresaid Step (c) may further comprise the following steps:
Step (c1): Passing a first wash solution through the ion-adsorbed resin to obtain a first washed resin, wherein the first wash solution is soft water, with a sodium content of less than 5 ppm; and
Step (c2): Passing a phosphoric acid solution through the first washed resin to desorb ferric ions, thereby obtaining an ion-desorbed resin and a second eluate.

The soft water typically contains less than 60 ppm of calcium and magnesium ions. By passing the first wash solution through the ion-adsorbed resin before introducing the phosphoric acid solution, any elements not adsorbed by the resin but remaining in the resin's gaps can be flushed out. This, process helps further reduce the concentration of un-adsorbed elements in the second eluate, thus facilitating the reuse of phosphate ions in the second eluate.

In some embodiments, the flow rate for the first wash solution through the ion-adsorbed resin may range from 3 BV/hr to 12 BV/hr.

In some embodiments, in the foresaid Step (c), a second wash solution may be passed through the ion-desorbed resin to obtain a second washed resin and an eluate. The second wash solution is soft water with a sodium content of less than 5 ppm. By passing the second wash solution through the ion-desorbed resin, any remaining phosphoric acid solution in the resin's gaps is washed out into the eluate, facilitating its subsequent reuse.

In some embodiments, the flow direction for the iron ion-containing solution through the chelating action exchange resin, the flow direction for the second solution through the chelating action exchange resin, the phosphoric acid solution through the ion-adsorbed, the first wash solution through the ion-adsorbed resin, and the second wash solution through the ion-desorbed resin may all be downflow.

In some embodiments, the iron(III) phosphate precipitate may be separated from the third solution using a solid-liquid separation step, such as centrifugation, but it is not limited thereto.

In this specification, a range expressed as "a lower-limit value to an upper-limit value" means that the value is greater than or equal to the lower endpoint and less than or equal to the upper endpoint, unless otherwise specified. For example, "adjusting the pH from 3 to 6" means the pH is from 3 or higher to 6 or lower.

Other objectives, advantages and novel features of the present disclosure will become more apparent from the following detailed description, which should be read in conjunction with the accompanying drawings.

### In the drawings:

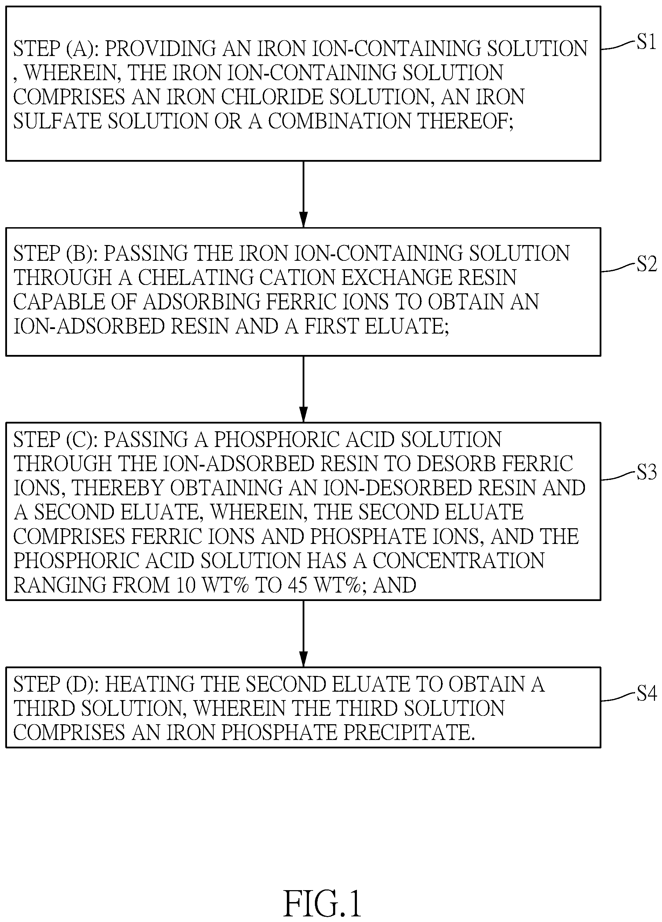

FIG. 1 is a schematic flowchart illustrating the method for recycling iron ions and preparing iron(III) phosphate according to the present disclosure.

The following embodiments are provided to illustrate the implementation and effects of the present disclosure. A person skilled in the art will readily recognize the advantages and effects of the present disclosure based on the contents of this specification.

### Example 1: Method for recycling iron ions and preparing iron(III) phosphate

The pH of an iron ion-containing solution was adjusted to a range of 3 to 6 to precipitate chromium ions and other cations that precipitate at this pH, such as lead ions, copper ions, aluminum ions and/or zinc ions. The precipitates were then removed, resulting in a first solution. The iron ion-containing solution used was an iron chloride waste solution, which has ferrous ions as principal iron ions.

Next, a hydrogen peroxide solution was added to the first solution to oxidize ferrous ions to ferric ions, resulting in a second solution. The concentration of the hydrogen peroxide solution ranged from 10 wt% to 50 wt%.

Next, the second solution was passed through a chelating cation exchange resin to adsorb the ferric ions, resulting in an ion-adsorbed resin and a first eluate. The chelating cation exchange resin used was LanXess TP-207 resin, manufactured by LANXESS Corporation. The resin volume was approximately 160 milliliters (mL), and the total volume of the second solution that passed through the resin was about 638 mL. The flow rate of the second solution through the resin was about 6 BV/hr. The total volume of the second solution was calculated to provide 200% of the resin's adsorptive capacity for iron ions.

Next, a first wash solution was passed through the ion-adsorbed resin to wash the resin and obtain a first washed resin. The first wash solution was soft water with a sodium content of less than 5 ppm and a pH of approximately 2.6 to 2.7. The total volume of the first wash solution passed through the ion-adsorbed resin was about 3 bed volumes (BV), with a flow rate of about 12 BV/hr.

Next, a phosphoric acid solution, with a phosphoric acid concentration of about 10 wt%, was passed through the first washed resin to desorb the ferric ions, resulting in an ion-desorbed resin and a second eluate. The second eluate contained ferric ions and phosphate ions. The volume of the second eluate was approximately 160 mL, and its pH was about 1.37.

Next, the second eluate was heated to precipitate iron(III) phosphate, resulting in a third solution and an iron(III) phosphate precipitate. The second eluate was heated at 90°C for 4 hours.

Next, the iron(III) phosphate precipitate was separated from the third solution using a solid-liquid step, such as centrifugation. The precipitate was then washed twice with the first wash solution and dried in an oven at 70°C for 2 hours. The resulting iron(III) phosphate solid had a dry weight of approximately 2.08 grams (g).

### Examples 2 to 4: Method for recycling iron ions and preparing iron(III) phosphate

The preparation processes in Examples 2 to 4 were similar to those in Example 1, using the same iron chloride waste solutions as in Example 1. The differences between Examples 2 to 4 and Example 1 were as follows: the phosphoric acid concentration of the phosphoric acid solution in Example 2 was about 20 wt%, in Example 3 it was about 30 wt%, and in Example 4 it was about 40 wt%. Asides from these differences, the remaining steps in Examples 2 to 4 followed the procedure of Example 1 to complete the recycling of iron ions and preparation of iron(III) phosphate.

The volume of the second eluate in Example 2 was approximately 160 mL, with a pH of about 1.17, and the dry weight of the iron(III) phosphate solid was around 6.78 g. For Example 3, the volume of the second eluate was approximately 160 mL, the pH was about 0.74, and the dry weight of the iron(III) phosphate solid 3 was about 6.25 g. In Example 4, the volume of the second eluate was also approximately 160 mL, with a pH of about 0.71, and the dry weight of the iron(III) phosphate solid was approximately 5.68 g.

### Example 2A: Recycling iron ions and preparing iron(III) phosphate by using recycled phosphoric acid solution

The preparation process of Example 2A were similar to that of Example 2, with the main difference being that the phosphoric acid solution used in Example 2A (also 20 wt%) was prepared by recycling the third solution from Example 2 (without the iron(III) phosphate precipitate) through a recycling step. Asides from this difference, the remaining steps in Examples 2A followed the process of Example 2 to complete the recycling of iron ions and preparation of iron(III) phosphate.

Specifically, the recycling step involved flowing the third solution from Example 2 through a cation exchange resin to remove cation impurities, followed by passing it through an anion exchange resin to remove sulfur ions. The solution was then combined with an 85% phosphoric acid solution to prepare a recycled phosphoric acid solution with a 20 wt% phosphoric acid concentration, which was reused in Example 2A. The volume of the second eluate in Example 2A was approximately 160 mL, with a pH of about 1.07.

### Comparative Example 1: Preparing iron(III) phosphate by directly using phosphoric acid solution for precipitation (prior art)

The iron chloride waste solution used in Comparative Example 1 was the same as in Examples 1 to 4, and the processes of pH adjustment and oxidization of Examples 1 to 4 were followed to obtain the second solution with volume of about 520 mL. Afterward, the second solution was concentrated and then added with about 29.3 mL of phosphoric acid solution with an 85 wt% phosphoric acid concentration, followed by adjusting the pH to about 1 to obtain an iron chloride solution to be precipitated. The volume of the iron chloride solution to be precipitated was about 400 mL, with an iron content of about 18,484 ppm and a phosphorus content of about 36,858 ppm.

Next, the iron chloride solution to be precipitated was heated at 90°C for 4 hours to precipitate iron(III) phosphate, and to obtain a solution after precipitation and an iron(III) phosphate precipitate. Then, the iron(III) phosphate precipitate was separated from the solution after precipitation using a solid-liquid step, such as centrifugation. The precipitate was then washed twice with the first wash solution and then dried in an oven at 70°C for 2 hours. The resulting iron(III) phosphate solid had a dry weight of about 14.19 g.

### Analysis 1: Measurement of Elemental Contents in Samples

The contents of various elements in the samples were measured using inductively coupled plasma mass spectrometry (ICP-MS). The results are presented below.

### (1) iron chloride waste solution

The results of elemental measurements and their contents in the iron chloride waste solution are shown in Table 1. The iron chloride waste solution refers to the second solutions of Examples 1 to 4, Example 2A, and Comparative Example 1.

**Table 1: elements and their contents in the iron chloride waste solution**

| **Element** | **Content (ppm)** |
|---|---|
| Al | 0.38 |
| B | 0.74 |
| Ca | 31.14 |
| Cd | <0.5 |
| Cr | <0.5 |
| Cu | 0.59 |
| Fe | 14,001 |
| K | 6.96 |
| Mg | 2.99 |
| Na | 3,492 |
| Ni | 3.17 |
| Pb | 0.53 |
| Zn | 46.1 |
| Co | <0.5 |
| Li | <0.5 |
| P | 20.96 |
| S | 12.75 |
| Cl | 32,000 |

According to the results in Table 1, the iron chloride waste solutions from Examples 1 to 4, Example 2A, and Comparative Example 1 contained not only the primary components of iron and chloride but also several other elements. Notably, the sodium content was 3,492 ppm, significantly higher than the other elements. Additionally, zinc (46.1 ppm), calcium (31.14 ppm), phosphorus (20.96 ppm), and sulfur (12.75 ppm) were present at relatively higher concentrations.

### (2) solution after the production of iron(III) phosphate precipitate

The results of the elemental measurements and their contents in the solution after the production of iron(III) phosphate precipitate are shown in Table 2. This solution refers to the third solutions of Examples 1 to 4, the third solution of Example 2A, and the solution after precipitation in Comparative Example 1.

**Table 2: Elements and their contents in the third solutions of Examples 1 to 4 (abbreviated as E1 to E4), the third solution of Example 2A (abbreviated as E2A), and the solution after precipitation of Comparative Example 1 (abbreviated as CE1)**

| **Element** | **Content of element in solution (ppm)** | | | | | |
|---|---|---|---|---|---|---|
| | **Third solution of E1** | **Third solution of E2** | **Third solution of E3** | **Third solution of E4** | **Third solution of E2A** | **Solution after precipitation of CE1** |
| Al | <0.5 | <0.5 | <0.5 | <0.5 | <0.5 | <0. 5 |
| B | <0.5 | <0.5 | 1.20 | <0.5 | 1.04 | 1.13 |
| Ca | 0.66 | 3.49 | 3.23 | <0.5 | 1.01 | 37.1 |
| Cd | <0.5 | <0.5 | <0.5 | <0.5 | <0.5 | <0.5 |
| Cr | <0.5 | <0.5 | <0.5 | <0.5 | <0.5 | <0. 5 |
| Cu | <0.5 | <0.5 | <0.5 | <0.5 | <0.5 | 0.89 |
| Fe | 32.51 | 287.9 | 1,152 | 6,067 | 522.0 | 5,478 |
| K | <0.5 | 0.74 | 1.44 | 1.48 | 0.58 | 27.79 |
| Mg | <0.5 | <0.5 | <0.5 | <0.5 | <0.5 | 4.08 |
| Na | 3.92 | 83.23 | 94.67 | 26.63 | 7.25 | 21,289 |
| Ni | 1.55 | 1.29 | 4.90 | 1.36 | 1.94 | 3.46 |
| Pb | <0.5 | <0.5 | <0.5 | <0.5 | <0.5 | <0.5 |
| Zn | 1.57 | 9.19 | 11.04 | 9.62 | 6.75 | 56.6 |
| Co | <0.5 | <0.5 | <0.5 | <0.5 | <0.5 | <0.5 |
| Li | <0.5 | <0.5 | <0.5 | <0.5 | <0.5 | <0.5 |
| P | 9,163 | 29,790 | 52,445 | 92,419 | 36,122 | 28,360 |
| S | <2,500 | <2,500 | <2,500 | <4,000 | - | 38,000 |
| Cl | <0.5 | <0.5 | <0.5 | <0.5 | <0.5 | <0.5 |

According to the results in Table 2, the elemental contents in the third solutions of Examples 1 to 4 were either comparable to or significantly lower than those in the solution after precipitation of Comparative Example 1. Notably, the chloride content in Comparative Example 1 was 38,000 ppm, while in Examples 1 to 4, it was less than 4,000 ppm, with Examples 1 to 3 having chloride contents further reduced to below 2,500 ppm-about one-tenth of the value in Comparative Example 1. As a result, the third solutions of Examples 1 to 4 had a significantly lower chloride content, making phosphate ions the dominant element in the solution. Therefore, the third solutions of Examples 1 to 4 primarily contained excess, unreacted phosphate ions, which could be recycled for preparing phosphoric acid solution, thus reducing resource waste and lowing the cost of purchasing phosphoric acid.

Furthermore, comparing the results of Example 2 and Example 2A, the elemental contents in the third solution of Example 2A were similar to those in Example 2, but the sodium content in Example 2A was much lower than that in Example 2. As a result, even though the third solution of Example 2 was recycled to prepare the phosphoric acid solution for Example 2A, the elemental contents in the third solution of Example 2A did not increase cumulatively due to the recycling process. Therefore, the third solution from Example 2 could be effectively recycled and reused to prepare the phosphoric acid solution without affecting the subsequent iron ion recycling and iron(III) phosphate preparation processes.

### (3) iron(III) phosphate precipitate

The results of the elemental measurements and their contents in the iron(III) phosphate precipitate are shown in Table 3. The iron(III) phosphate precipitate refers to the iron(III) phosphate solids from Examples 1 to 4, Example 2A, and Comparative Example 1.

**Table 3: Elements and their contents in the iron(III) phosphate solids from Examples 1 to 4 (abbreviated as E1 to E4), Example 2A (abbreviated as E2A), and Comparative Example 1 (abbreviated as CE1)**

| **Element** | **Content of element in iron(III) phosphate solid** | | | | | |
|---|---|---|---|---|---|---|
| | **E1** | **E2** | **E3** | **E4** | **E2A** | **CE1** |
| Al | 12.51 ppm | 7.70 ppm | 5.80 ppm | <4.99 ppm | 5.46 ppm | 11.04 ppm |
| B | <5.62 ppm | <4.94 ppm | <4.99 ppm | <4.99 ppm | <2.03 ppm | <4.97 ppm |
| Ca | <5.62 ppm | <4.94 ppm | <4.99 ppm | <4.99 ppm | <2.08 ppm | <4.97 ppm |
| Cd | <5.62 ppm | <4.94 ppm | <4.99 ppm | <4.99 ppm | <2.03 ppm | <4.97 ppm |
| Cr | <5.62 ppm | <4.94 ppm | <4.99 ppm | <4.99 ppm | <2.03 ppm | <4.97 ppm |
| Cu | <5.62 ppm | <4.94 ppm | <4.99 ppm | <4.99 ppm | <2.03 ppm | <4.97 ppm |
| Fe | 30.30 wt% | 31.04 wt% | 30.12 wt% | 32.57 wt% | 31.42 wt% | 32.69 wt% |
| K | 7.57 ppm | 7.96 ppm | 8.11 ppm | 10.19 ppm | 6.69 ppm | 11.84 ppm |
| Mg | <5.62 ppm | <4.94 ppm | <4.99 ppm | <4.99 ppm | <2.03 ppm | <4.97 ppm |
| Na | 20.80 ppm | <4.94 ppm | 7.01 ppm | 13.06 ppm | 4.5 ppm | 287.8 ppm |
| Ni | <5.62 ppm | <4.94 ppm | <4.99 ppm | <4.99 ppm | <2.03 ppm | <4.97 ppm |
| Pb | <5.62 ppm | 5.38 ppm | 6.44 ppm | 7.03 ppm | 6.11 ppm | 5.55 ppm |
| Co | <5.62 ppm | 5.45 ppm | 5.42 ppm | 6.89 ppm | 2.71 ppm | 6.75 ppm |
| Li | <5.62 ppm | <4.94 ppm | <4.99 ppm | <4.99 ppm | <2.03 ppm | <4.97 ppm |
| P | 17.54 wt% | 16.91 wt% | 16.99 wt% | 18.84 wt% | 17.61 wt% | 18.07 wt% |
| S | <112.4 ppm | <98.81 ppm | <99.80 ppm | <99.80 ppm | <40.60 ppm | <99.40 ppm |

According to the results in Table 3, the sodium content in the iron(III) phosphate solid of Comparative Example 1 was 287.8 ppm, whereas the sodium content in the iron(III) phosphate solids of Examples 1 to 4 was much lower, with values of 20.80 ppm, <4.99 ppm, 7.01 ppm, and 13.06 ppm, respectively. As a result, the iron(III) phosphate prepared in Examples 1 to 4 meets the criteria for use as a cathode material in lithium iron phosphate batteries, with the sodium content in the iron(III) phosphate being less than 150 ppm.

Furthermore, comparing the results of Example 2 and Example 2A, the elemental contents in the iron(III) phosphate solid of Example 2A were similar to those in Example 2. Despite the recycling of the third solution from Example 2 to prepare the phosphoric acid solution for Example 2A, the sodium content in the iron(III) phosphate solid of Example 2A was only 4.5 ppm, which also met the criteria for use as a cathode material in lithium iron phosphate batteries. Therefore, the third solution from Example 2 could be recycled and reused for preparing the phosphoric acid solution without affecting the quality of the iron(III) phosphate solid produced.

### Analysis 2: Measurement of the Yield of Iron(III) Phosphate Precipitate

This analysis measured the yields of iron(III) phosphate precipitate obtained during the preparation processes of Examples 1 to 4, Example 2A, and Comparative Example 1. Specifically, as described in Analysis 1, the iron content in the second eluates of Examples 1 to 4, the second eluate of Example 2A, and the iron(III) chloride solution to be precipitated in Comparative Example 1 (denoted as A) was measured using ICP-MS. Additionally, the iron content in the third solutions of Examples 1 to 4, the third solution of Example 2A, and the solution after precipitation in Comparative Example 1 (denoted as B) was measured. The yields of iron(III) phosphate precipitate for each group were then calculated using the equation: [(A-B)]/A×100%, and the results are shown in Table 4.

**Table 4: The yields of iron(III) phosphate precipitate of Examples 1 to 4 (abbreviated as E1 to E4), Example 2A (abbreviated as E2A), and Comparative Example 1 (abbreviated as CE1)**

| **Group** | **Yield of iron(III) phosphate precipitate (%)** |
|---|---|
| Example 1 | 99.59 |
| Example 2 | 98.74 |
| Example 3 | 94.90 |
| Example 4 | 72.17 |
| Example 2A | 97.74 |
| Comparative Example 1 | 71.84 |

According to the results in Table 4, the yields of iron(III) phosphate precipitate of Examples 1 to 4 and Example 2A were higher than that in Comparative Example 1. Specifically, the yields in Examples 1 to 3 and Example 2A exceeded 90%. Thus, compared to the prior art, the method of recycling iron ions and preparing iron(III) phosphate in the present disclosure demonstrated a higher yield.

In summary, by using a specific type of ion exchange resin, and selecting a specific concentration of phosphoric acid solution, the method of recycling iron ions and preparing iron(III) phosphate in the present disclosure effectively recycle iron ions and produces iron(III) phosphate that meet the criteria for use as a cathode material in lithium iron phosphate batteries. Additionally, the method minimizes waste solution production and allows for easy recycling and reuse of the phosphoric acid solution, thereby reducing overall costs and supporting the sustainable reuse of resources.

## Claims

1. A method for recycling iron ions and preparing iron(III) phosphate, **characterized by** comprising the following steps:
**Step (a):** Providing an iron ion-containing solution, wherein, the iron ion-containing solution comprises an iron chloride solution, an iron sulfate solution or a combination thereof;
**Step (b):** Passing the iron ion-containing solution through a chelating cation exchange resin capable of adsorbing ferric ions to obtain an ion-adsorbed resin and a first eluate;
**Step (c):** Passing a phosphoric acid solution through the ion-adsorbed resin to desorb ferric ions, thereby obtaining an ion-desorbed resin and a second eluate, wherein the second eluate comprises ferric ions and phosphate ions, and the phosphoric acid solution has a concentration ranging from 10 weight percent to 45 weight percent; and
**Step (d):** Heating the second eluate to obtain a third solution, wherein the third solution comprises an iron(III) phosphate precipitate.

2. The method of claim 1, **characterized by** further comprising the following steps:
**Step (i):** Adjusting the pH value of the iron ion-containing solution to range from 3 to 6 to obtain a first solution; and
**Step (ii):** Oxidizing ferrous ions in the first solution to ferric ions to obtain a second solution; wherein, the second solution is the iron ion-containing solution that passes through the chelating cation exchange resin in Step (b).

3. The method of claim 1 or 2, **characterized in that** a chelating functional group of the chelating cation exchange resin comprises iminodiacetic acid.

4. The method of any one of claims 1 to 3, **characterized in that** a sodium content in the iron(III) phosphate precipitate is less than 150 ppm.

5. The method of any one of claims 1 to 4, **characterized in that** the iron ion-containing solution comprises the iron chloride solution, and a chloride content in the third solution is less than 4,000 ppm.

6. The method of any one of claims 1 to 4, **characterized in that** the iron ion-containing solution comprises the iron sulfate solution, and a sulfate content in the third solution is less than 4,000 ppm.

7. The method of any one of claims 1 to 6, **characterized in that** the pH of the second eluate ranges from 0.65 to 1.45.

8. The method of any one of claims 1 to 7, **characterized in that** the second eluate contains less than 5 ppm of calcium, less than 35 ppm of copper, less than 150 ppm of potassium, less than 5 ppm of magnesium, less than 150 ppm of sodium, less than 3 ppm of nickel, less than 1 ppm of lead, less than 5 ppm of aluminum, and/or less than 15 ppm of zinc.

9. The method of any one of claims 1 to 8, **characterized in that** in Step (e), the second eluate is heated at 70°C to 90°C for 4 hours to 6 hours to obtain the third solution.

10. The method of any one of claims 2 to 9, **characterized in that** in Step (ii), an oxidant is added to the first solution to oxidize ferrous ions to ferric ions, and the oxidant comprises a hydrogen peroxide solution.

11. The method of any one of claims 1 to 10, **characterized in that** Step (c) further comprises the following steps:
**Step (c1):** Passing a first wash solution through the ion-adsorbed resin to obtain a first washed resin, wherein, the first wash solution is soft water with a sodium content of less than 5 ppm; and
**Step (c2):** Passing a phosphoric acid solution through the first washed resin to desorb ferric ions, thereby obtaining an ion-desorbed resin and a second eluate.

12. The method of any one of claims 1 to 11, **characterized in that** in Step (c), a second wash solution is passed through the ion-desorbed resin to obtain a second washed resin and an eluate, wherein, the second wash solution is soft water with a sodium content of less than 5 ppm.
